# EUROPÄISCHE PATENTANMELDUNG

(11) **EP 2 645 556 A1**
(43) Veröffentlichungstag der Anmeldung: **02.10.2013**
(21) Anmeldenummer: 12162450.6
(22) Anmeldetag: 30.03.2012
(51) Int. Cl.: H02M 3/158, G05F 1/46

(54) **Steuerungsverfahren eines Stromversorgungssystems**

(71) Anmelder: Siemens Aktiengesellschaft, 80333 München (DE)
(72) Erfinder: Schweigert, Harald, 1120 Wien (AT)

(57) **Zusammenfassung**

Die Erfindung betrifft ein Steuerungsverfahren eines Stromversorgungssystem mit wenigstens zwei Leistungsteilen (L1, L2, L1', L2'), deren Leistungsausgänge parallel geschaltet sind, wobei jeder Leistungsteil (L1, L2, L1', L2') mittels einer eigenen Steuerung (STR1, STR2) angesteuert wird und wobei jeder Steuerung (STR1, STR2) zumindest eine erste Stromgrenze (S1) vorgegeben ist, bis zu der die Steuerung (STR1, STR2) den zugeordneten Leistungsteil (L1, L2, L1', L2') in einem Normalmodus ansteuert. Dabei ist jeder Steuerung (STR1, STR2) ein erster Absenkungswert (U_{A}, U_{A}') der Ausgangsspannung (U_{OUT}, U_{OUT1}, U_{OUT2}) bei Erreichung der ersten Stromgrenze (S1) vorgegeben und die jeweilige Steuerung (STR1, STR2) regelt bei Erreichung der ersten Stromgrenze (S1) die Ausgangsspannung (U_{OUT}, U_{OUT1}, U_{OUT2}) des zugehörigen Leistungsteils (L1, L2, L1', L2') auf den ersten Absenkungswert (U_{A}, U_{A}'). Ein derartiges Steuerungsverfahren ermöglicht die Parallelschaltung mehrerer Leistungsteile (L1, L2, L1', L2') ohne übergeordnete Steuerung.

## Beschreibung

Die Erfindung betrifft ein Steuerungsverfahren eines Stromversorgungssystem mit wenigstens zwei Leistungsteilen, deren Leistungsausgänge parallel geschaltet sind, wobei jeder Leistungsteil eine Ausgangsspannung aufweist und mittels einer eigenen Steuerung angesteuert wird und wobei jeder Steuerung zumindest eine erste Stromgrenze vorgegeben ist, bis zu der die Steuerung den zugeordneten Leistungsteil in einem Normalmodus ansteuert. Zudem betrifft die Erfindung ein Stormversorgungssystem zur Ausführung des Steuerungsverfahrens.

Um eine Last mit einer vorgegebenen Spannung zu versorgen wird oft ein Stormversorgungsgerät verwendet, welches die elektrische Energie eines Versorgungsnetzes in die gewünschte Spannung umwandelt. Meist handelt es sich dabei um ein getaktetes Schaltnetzteil mit einem Leistungsteil und einer Steuerung. Man kennt auch Geräte mit mehreren Leistungsteilen, die mit jeweils eigenen Steuerungen angesteuert sind.

Ein Leistungsteil umfasst Leistungsbauteile, die für eine bestimmte Nennlast ausgelegt sind. Diese Nennlast leitet sich in der Regel von der zulässigen thermischen Bauteilebelastung ab. Benötigt eine angeschlossene Last eine höhere Leistung, kommen Stromversorgungssysteme mit parallel geschalteten Leistungsteilausgängen zur Anwendung. Auf diese Weise sind baugleiche Leistungsteile für unterschiedliche Ausgangsleistungen nutzbar. Das vereinfacht die Lagerhaltung und erlaubt höhere Stückzahlen mit entsprechend reduzierten Fertigungsstückkosten.

Bei der Parallelschaltung mehrerer Leistungsteile ist zu beachten, dass alle Leistungsteile zur Versorgung der Last beitragen, um eine gleichmäßige Belastung sicherzustellen. Das gilt insbesondere für Stromversorgungen mit elektronischen Sicherungen, die eine Stromgrenze aufweisen, bis zu der die Stromversorgung in einem Normalmodus betrieben wird. Erfolgt nämlich bei solchen Stromversorgungen keine ausgeglichene Lastaufteilung, gerät ein Leistungsteil in einen Sicherungsmodus, bevor ein parallel geschalteter Leistungsteil seine volle Leistungsfähigkeit erreicht. Dieser Zustand führt in der Regel zu einer Abschaltung des Stromversorgungssystems, weil der Sicherungsmodus nur eine bestimmte Zeit aufrecht erhalten wird, bevor eine drohende thermische Überlastung eine Abschaltung erfordert. Trotz Parallelschaltung mehrerer Leistungsteile steht somit die summierte Nennleistung gar nicht zur Verfügung.

Konkret entsteht eine ungleichmäßige Belastung parallel geschalteter Leistungsteile infolge abweichender Innenwiderstände bzw. abweichender Einstellungen der Ausgangsspannungsregler. Eine solche Abweichung ist infolge von Bauteiltoleranzen beziehungsweise Steuerungstoleranzen immer unvermeidbar, wenn jeder Leistungsteil separat mittels einer eigenen Steuerung angesteuert ist. Der Leistungsteil mit der höchsten Ausgangsspannung liefert zwangsläufig den meisten Strom an die angeschlossene Last.

Zur Realisierung einer Parallelschaltung werden nach dem Stand der Technik Geräte verwendet, die mit steigendem Strom infolge eines hohen Widerstands eine merkliche Ausgangsspannungsreduktion aufweisen. Bei einer Parallelschaltung führt diese Spannungsreduktion dazu, dass sich die Ströme an den Ausgängen der Leistungsteile zwangsläufig ausgleichen. Sobald ein Leistungsteil eine höhere Leistung abgibt, fällt die Ausgangsspannung dieses Leistungsteils ab und die anderen Leistungsteile liefern mehr Strom. Verbunden ist diese Lösung mit einer erhöhten Verlustleistung infolge des hohen Widerstandswertes der einzelnen Leistungsteile.

Der Erfindung liegt die Aufgabe zugrunde, für ein Steuerungsverfahren der eingangs genannten Art eine Verbesserung gegenüber dem Stand der Technik anzugeben. Zudem soll ein entsprechendes Stromversorgungssystem konkretisiert werden.

Erfindungsgemäß wird diese Aufgabe gelöst durch ein Verfahren gemäß Anspruch 1 und eine Anordnung gemäß Anspruch 9. Verbesserungen sind in abhängigen Ansprüchen beschrieben.

Dabei ist jeder Steuerung ein erster Absenkungswert der Ausgangsspannung bei Erreichung der ersten Stromgrenze vorgegeben und die jeweilige Steuerung regelt bei Erreichung der ersten Stromgrenze die Ausgangsspannung des zugehörigen Leistungsteils auf den ersten Absenkungswert. Ein derartiges Steuerungsverfahren ermöglicht die Parallelschaltung mehrerer Leistungsteile ohne übergeordnete Steuerung. Es ist auch keine Signalverbindung zwischen den Steuerungen erforderlich, sondern lediglich eine Verbindung der Leistungsausgänge. Jeder Leistungsteil wird separat mit einer eigenen Steuerung angesteuert. Im Normalbetrieb wird der Abfall der Ausgangsspannung bei steigendem Strom gering gehalten, um die Verluste zu minimieren. Erst wenn ein Leistungsteil die erste Stromgrenze erreicht, erzwingt die zugehörige Steuerung eine Spannungsverringerung. Dadurch sinkt die Ausgangsspannung dieses Leistungsteils unter die Ausgangsspannung der parallel geschalteten Leistungsteile. Die abgegebene Leistung des Leistungsteils mit abgesenkter Ausgangsspannung bleibt somit konstant, bis alle anderen parallel geschalteten Leistungsteile die erste Stromgrenze erreichen. Auf diese Weise ist bei einer Parallelschaltung die summierte Nennleistung aller Leistungsteile nutzbar.

Von Vorteil ist es, wenn der erste Absenkungswert abgestimmt ist auf einen Toleranzbereich der Ausgangsspannungen, welche die einzelnen Leistungsteile entsprechend einer U/I-Kinnlinie bei Erreichung der ersten Stromgrenze liefern. Das gilt insbesondere bei linear arbeitenden elektronischen Sicherungen, die im Normalbetrieb die Eingangsspannung mit den geringst möglichen Verlusten durchleiten. Naturgemäß gibt es bei mehreren Leistungsteilen eine Streuung der einzelnen U/I-Kennlinien. Das ist auf Toleranzen der verwendeten Bauteile bzw. Toleranzen bei der Ansteuerung dieser Bauteile zurückzuführen. Dabei lässt sich anhand von Tests oder Berechnungen für baugleiche Leistungsteile angeben, welche U/I-Kennlinie im schlechtesten Fall und welche im besten Fall erreichbar ist. Eine U/I-Kennlinie mit geringem Spannungsabfall aufgrund eines geringen Innenwiderstands ergibt sich mit den besten Bauteilen innerhalb eines Toleranzbereichs. Für jeden Bauteil wird der Toleranzbereich üblicherweise vom Hersteller angegeben.

Durch die Kenntnis, welche U/I-Kennlinie im schlechtesten Fall auftritt, lässt sich schon während der Geräteentwicklung festlegen, welcher maximale Spannungsabfall bei steigendem Strom zu erwarten ist. Sind im schlechtesten Fall zufällig nur Bauteile mit gerade noch zulässigen Toleranzwerten in einem einzigen Leistungsteil verbaut, dann weist dieser fiktive Leistungsteil einen höchstmöglichen Innenwiderstand auf. Alle anderen Leistungsteile liefern bei der ersten Stromgrenze eine Ausgangsspannung, die über jener dieses fiktiven Leistungsteils liegt.

Der erste Absenkungswert ist demnach so festgelegt, dass bei Erreichung der ersten Stromgrenze die Ausgangsspannung auf jene des fiktiven Leistungsteils abgesenkt wird. Da es kein qualitativ schlechteres Leistungsteil geben kann, ist damit sichergestellt, die die Ausgangsspannungen aller parallel geschalteter Leistungsteile über dieser abgesenkten Ausgangsspannung liegen. Eine betriebssichere Auslegung der Leistungsteile berücksichtigt bei der Schaltungsdimensionierung auch die thermische Belastung und Kühlung mit ungünstigsten Bauteiltoleranzen und maximal zulässiger Belastung, sodass in keinem Fall eine Überhitzung entstehen kann. Daher ist die Spannungsabsenkung auf diesen Wert thermisch zulässig, ohne dass zusätzliche Aufwände in die Kühlung investiert werden müssen.

In einer Weiterentwicklung der Erfindung ist vorgesehen, dass jeder Steuerung eine zweite Stromgrenze vorgegeben ist, die höher als die erste Stromgrenze ist und dass der jeweiligen Steuerung ein zweiter Absenkungswert für die Ausgangsspannung bei Erreichung der zweiten Stromgrenze vorgegeben ist und dass die jeweilige Steuerung bei Erreichung der zweiten Stromgrenze die Ausgangsspannung des zugehörigen Leistungsteils auf den zweiten Absenkungswert regelt. Auf diese Weise ist ein zweistufiges Stromaufteilungskonzept realisiert.

Günstigerweise ist dieses zweistufige Stromaufteilungskonzept in der Weise gestaltet, dass zumindest ein Leistungsteil in einem Überlastmodus betrieben wird, wenn jeder andere Leistungsteil auf den ersten Absenkungswert regelt wird. Sobald also alle parallel geschalteten Leistungsteile an der ersten Stromgrenze betrieben werden und somit die größtmögliche Nennleistung liefern, erfolgt eine weitere Leistungserhöhung. Zumindest ein Leistungsteil geht in einen Überlastmodus mit einem Strom oberhalb der ersten Stromgrenze über. Sinnvollerweise ist für diesen Überlastbetrieb eine zeitliche Beschränkung vorgegeben, um eine Überbelastung des betreffenden Leistungsteils zu vermeiden. Günstigerweise geht jener Leistungsteil als erster in den Überlastmodus über, welcher zuvor bei steigender Last als erster die erste Stromgrenze erreicht hat.

Auch für den zweiten Absenkungswert ist es von Vorteil, wenn dieser auf einen Toleranzbereich der Ausgangsspannungen oder einer Differenzspannung abgestimmt ist, welche die einzelnen Leistungsteile entsprechend einer U/I-Kennlinie bei Erreichung der zweiten Stromgrenze liefern. Dabei wird wieder ein fiktiver Leistungsteil betrachtet, dessen Bauteile alle gerade noch im Toleranzbereich liegen. Die Ausgangsspannung dieses fiktiven Leistungsteils bei der zweiten Stromgrenze legt den zweiten Absenkungswert fest.

Dabei ist es günstig, wenn zumindest ein Leistungsteil in einem Begrenzungsmodus betrieben wird, wenn jeder andere Leistungsteil auf den zweiten Absenkungswert regelt wird. Der zweite Stromgrenzwert definiert somit eine Grenze, bei dessen Überschreitung der Strom begrenzt und gegebenenfalls abgeschaltet wird. Eine Abschaltung geschieht in jedem Fall, wenn die Belastung des Stromversorgungssystems so groß wird, dass alle Leistungsteile diesen zweiten Stromgrenzwert für eine kurze Zeit überschreiten. Davor wird nur dann abgeschaltet, wenn ein Leistungsteil bei erreichter zweiter Stromgrenze die zulässige Dauer des Überlastbetriebs überschreitet. Kurzzeitig können auf diese Weise alle parallel geschalteten Leistungsteile im Überlastmodus betrieben werden. Günstigerweise geht jener Leistungsteil als erster in den Begrenzungsmodus über, welcher zuvor bei steigender Last als erster die zweite Stromgrenze erreicht hat.

Eine Variante des Steuerungsverfahrens sieht vor, dass als jeweiliger Absenkungswert eine Spannungsdifferenz vorgegeben ist. Sobald ein Leistungsteil eine erste oder zweite Stromgrenze erreicht, verringert die zugehörige Steuerung die Ausgangsspannung um eine vorgegebene Spannungsdifferenz, die in weiterer Folge auch die Regelgröße darstellt. Insbesondere bei linear gesteuerten elektronischen Sicherungen mit einer gemeinsamen Spannungsquelle ist ein als Spannungsdifferenz vorgegebener Absenkungswert sinnvoll.

Alternativ dazu ist vorgesehen, dass als jeweiliger Absenkungswert ein Ausgangsspannungswert vorgegeben ist. In diesem Fall regelt die Steuerung einen Leistungsteil jeweils auf einen vorgegeben Spannungswert, sobald eine erste oder zweite Stromgrenze erreicht wird. Sinnvoll ist ein solches Verfahren bei getakteten Leistungsteilen, die dauerhaft auf eine vorgegebene Ausgangsspannung geregelt werden.

Des Weiteren ist es günstig, wenn jeder Leistungsteil jeweils eine mit steigendem Ausgangsstrom abfallende Ausgangsspannung liefert. Eine solche U/I-Kennlinie ermöglicht im Normalbetrieb eine einfache Erfassung des jeweiligen Ausgangsstromes bzw. der jeweiligen Ausgangsspannung. Ist die jeweilige U/I-Kennlinie in einer Erfassungseinheit abgespeichert, genügt die Messung eines Ausgangswertes (Strom oder Spannung). Sind die Leistungsteile als parallel angeordnete Leistungsschutzschalter am Ausgang einer Stromversorgung angeordnet, dann ergibt sich eine solche U/I-Kennlinie von selbst. Bei parallel geschalteten Schaltnetzteilen ist eine abfallende U/I-Kennlinie durch Anpassung der jeweiligen Ansteuerung realisierbar (künstlicher Innenwiderstand).

Alternativ dazu ist vorgesehen, dass jeder Leistungsteil eine konstant geregelte Ausgangsspannung liefert. Im jeweiligen Betriebsmodus erfolgt somit keine Änderung der Ausgangsspannung. Nur bei Überschreitung einer ersten oder zweiten Stromgrenze kommt es zu einer Spannungsabsenkung, wobei mit weiter steigendem Strom die Spannung auf gesenktem Niveau konstant gehalten wird.

Ein erfindungsgemäßes Stromversorgungssystem umfasst wenigstens zwei Leistungsteile, deren Leistungsausgänge parallel geschaltet sind, wobei jeder Leistungsteil mittels einer eigenen Steuerung angesteuert ist, wobei zudem jede Steuerung zur Durchführung eines vorgenannten Verfahrens eingerichtet ist.

In einer Ausformung umfasst das Stromversorgungssystem ein Stromversorgungsgerät mit mehreren Ausgängen, welche mittels einer Verbindung parallel geschaltet sind. Stromversorgungsgeräte mit mehreren elektronisch abgesicherten Ausgängen sind somit auf einfache Weise für einen Parallelbetrieb nutzbar, ohne dass die elektronischen Sicherungen zu einer Abschaltung des Geräts führen. Zweck einer Parallelschaltung ist die Versorgung einer großen Last, für welche die Leistung eines Ausgangs nicht ausreicht.

Eine andere Ausformung sieht vor, dass das Stromversorgungssystem mehrere Stromversorgungsgeräte umfasst, deren Ausgänge mittels einer Verbindung parallel geschaltet sind. Solche Stromversorgungsgeräte benötigen somit keine übergeordnete Steuerung, um in einem Parallelbetrieb eine Last zu versorgen.

Dabei umfasst günstigerweise jedes Stromversorgungsgerät einen Spannungsregler, um die jeweilige Ausgangsspannung auf einen konstanten Wert zu regeln.

Die Erfindung wird nachfolgend in beispielhafter Weise unter Bezugnahme auf die beigefügten Figuren erläutert. Es zeigen in schematischer Darstellung:
- Fig. 1a: U/I-Kennlinie eines Leistungsteils mit elektronischer Sicherung
- Fig. 1b: U/I-Kennlinie eines taktendes Leistungsteils
- Fig. 2: U/I-Kennlinien zweier parallel geschalteter Leistungsteile
- Fig. 3: Stromversorgungsgerät mit zwei parallel geschalteten Ausgängen und Ausgangswiderständen
- Fig. 4: U/I-Kennlinie mit Absenkung der Ausgangsspannung bei einer ersten und einer zweiten Stromgrenze
- Fig. 5: Stromversorgungsgerät mit zwei parallel geschalteten Ausgängen mit erfindungsgemäßer Ansteuerung
- Fig. 6: Zwei parallel geschaltete Stromversorgungsgeräte mit erfindungsgemäßer Ansteuerung
- Fig. 7: U/I-Kennlinie mit Absenkung der Ausgangsspannung bei einer ersten und einer zweiten Stromgrenze auf vorgegebene Spannungswerte

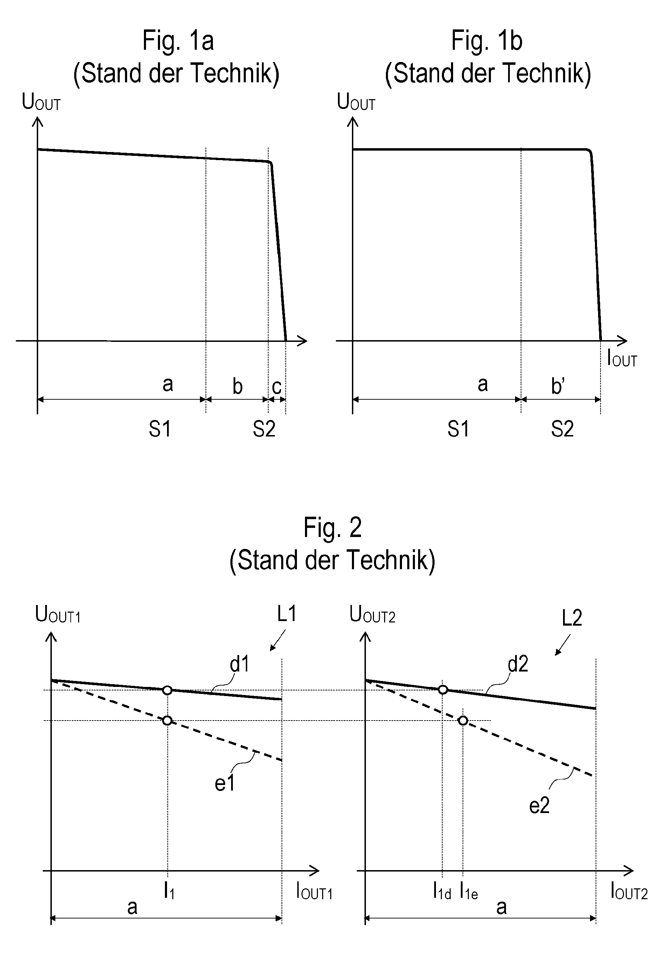

Die in Fig. 1a dargestellte U/I-Kennlinie gibt den Verlauf einer Ausgangsspannung U_{OUT} über einem Ausgangsstrom I_{OUT} einer abgesicherten Stromversorgung wieder. In einem ersten Bereich a des Ausgangsstromes I_{OUT} wird die Stromversorgung in einem Normalmodus betrieben. In diesem Modus kann dauerhaft Leistung an eine Last abgegeben werden. Bei Überschreitung einer ersten Stromgrenze S1 geht das Gerät in einen Überlastmodusbereich b über. Dabei beginnt beispielsweise ein Timer zu laufen. Wird eine zulässige Dauer in diesem Überlastmodus erreicht, schaltet die Stromversorgung ab.

Falls der Strom I_{OUT} rasch weiter steigt, ohne dass die zulässige Dauer im Überlastmodus erreicht wird, gelangt das Gerät bei einer zweiten Stromgrenze S2 in einen Begrenzungsmodusbereich c. Hier wird nach einer sehr kurzen Zeitspanne (z.B. 100ms) abgeschaltet, weil ein lineares Begrenzungselement die überschüssige Energie aufnimmt. Die Dauer im Begrenzungsmodus hängt in erster Linie von der thermischen Belastbarkeit des Begrenzungselements ab.

Ein taktender Leistungsteil liefert in der Regel eine konstante Ausgangsspannung U_{OUT}, wie in Fig. 1b dargestellt. Dabei wird in einem Überlastmodusbereich b' keine zusätzliche Verlustenergie aufgenommen. Eine Abschaltung nach einer vorgegebenen Zeit ist trotzdem sinnvoll, weil eine andauernde Überlast auf eine Störung einer versorgten Last zurückzuführen ist.

Werden zwei Leistungsteile L1, L2 eines Stromversorgungssystems zusammengeschaltet, stellen sich Ausgangsströme I_{OUT1,} I_{OUT2} gemäß Fig. 2 ein. Als Leistungsteil L1, L2 bzw. L1', L2' sind die Komponenten bezeichnet, die in dem Stromversorgungssystem parallel geschaltet sind. Das sind beispielsweise als elektronische Sicherungen fungierende Leistungsschutzschalter (z.B. Linearregler) eines Stromversorgungsgeräts oder parallel geschaltete Wandler mit jeweils künstlich geregeltem Innenwiderstand, der eine abfallende Kennlinie ergibt.

Selbst bei baugleichen Ausführungen der parallel geschalteten Komponenten weichen die Kennlinien d1, d2 bzw. e1, e2 aufgrund unvermeidbarer Toleranzen voneinander ab. Die Neigung der U/I-Kennlinien d1, d2 bzw. e1, e2 beeinflusst dabei die Aufteilung der Ströme I_{OUT1}, I_{OUT2}. Bei flachen U/I-Kennlinien d1, d2 führt dieselbe Spannung beim ersten Ausgang dazu, dass sich ein Strom I_{OUT1} bei ca. 50% des Nennstromes einstellt. Beim zweiten Ausgang beträgt der Strom I_{1d} hingegen nur 30% des Nennstromes.

Die beiden Ströme I_{OUT1}, I_{OUT2} nähern sind an, wenn die U/I-Kennlinien e1, e2 steiler sind. Im dargestellten Beispiel beträgt der Strom I₁ₑ des zweiten Ausgangs bereits 40% der Nennspannung, wenn der erste Ausgang 50% des Nennstromes führt.

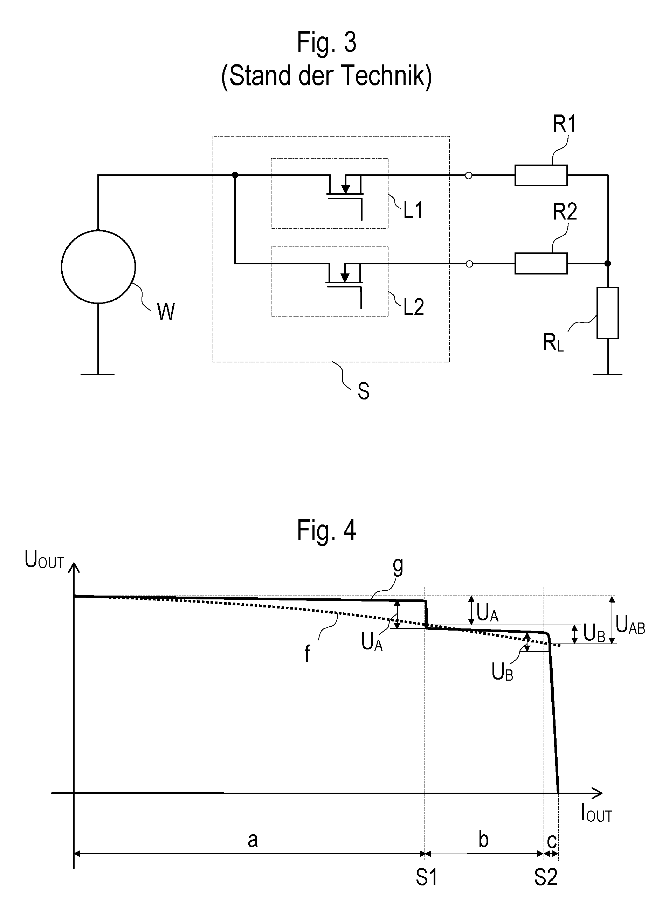

Eine bekannte Möglichkeit zur Realisierung einer steilere U/I-Kennlinie e1, e2 ist die Anordnung von Widerständen R1 R2 an den beiden Ausgängen, wie in Fig. 3 dargestellt. Ein Wandler W umfasst dabei zwei Ausgänge, wobei jeder Ausgang mit einem als Längsregler ausgebildeten Leistungsteil L1, L2 abgesichert ist. Diese beiden Leistungsteile L1, L2 sind beispielsweise in einem Sicherungsmodul S zusammengefasst. Die Ansteuerung der Längsregler erfolgt separat in Abhängigkeit des jeweils durch einen Ausgangskanal fließenden Stromes I_{OUT1}, I_{OUT2}. An jedem Ausgang ist ein eigener Widerstand R1, R2, vorgesehen, um die Steilheit der U/I-Kennlinien zu erhöhen. Nach den Widerständen R1, R2 sind die Ausgänge zusammengeführt und mit einer Last R_{L} verbunden.

Bei gleichen Nennströmen sind hierbei meist identische Werte für die Widerstände R1, R2 vorgesehen. Nachteilig sind die hohen Verlustleistungen in den Widerständen R1, R2, um den gewünschten Stromausgleich sicherzustellen.

Dieser Nachteil wird erfindungsgemäß vermieden. Ein Bespiel für eine entsprechende U/I-Kennlinie ist in Fig. 4 dargestellt. An einem Übergang von einem Normalmodusbereich a zu einem Überlastmodusbereich b ist eine erste Stromgrenze S1 vorgegeben. Eine zweite Stromgrenze S2 befindet sich am Ende des Überlastmodusbereichs b. Dort beginnt ein Begrenzungsmodusbereich c.

Ein fiktiver Leistungsteil, welcher nur aus Bauteilen mit gerade noch tolerierbaren Eigenschaften bestünde, würde die gepunktet dargestellte U/I-Kennlinie f aufweisen. Ein solcher fiktiver Leistungsteil gäbe im Betrieb eine maximal zulässige Verlustwärme ab. Dafür ist jeder Leistungsteil ausgelegt. Eine solche U/I-Kennlinie f ist entweder errechenbar oder mittels eines eigens angefertigten Leistungsteils, der die obigen Bedingungen erfüllt, messbar.

Die sich bei den Stromgrenzen S1, S2 ergebenden Ausgangsspannungswerte dieses fiktiven oder eigens angefertigten Leistungsteils geben für alle zum Einsatz kommenden Leistungsteile für eine optimal arbeitende Lösung die Absenkungswerte U_{A}, U_{B}, U_{AB} bzw. U_{A}', U_{B}' vor. Eine erfindungsgemäße Lösung ist aber auch dann gegeben, wenn bei Erreichung einer Stromgrenze S1, S2 nicht ganz bis zum jeweiligen Ausgangsspannungswert des fiktiven Leistungsteils (gepunktete Linie) abgesenkt wird. Dann sind alle parallel geschalteten Leistungsteile bis zu diesem Absenkungswert nutzbar.

Ein in einem Stromversorgungssystem parallel geschalteter Leistungsteil L1, L2 bzw. L1', L2' weist eine U/I-Kennlinie g auf, deren Neigung in der Regel deutlich geringer sein wird als die Kennlinie f des qualitativ schlechtesten Leistungsteils. Im Normalmodusbereich a sind daher nur geringe Verluste gegeben. Erst wenn die erste Stromgrenze S1 erreicht wird, regelt die zugehörige Steuerung STR1 bzw. STR2 auf den vorgegebenen Absenkungswert.

Im vorliegenden Beispiel wird bei Erreichung der ersten Stromgrenze S1 um einen Spannungswert U_{A} abgesenkt, der dem Spannungsabfall des fiktiven Leistungsteils mit der schlechten U/I-Kennlinie f entspricht. Bei Erreichung der zweiten Stromgrenze S2 wird mittels zugehöriger Steuerung STR1 bzw. STR2 um einen weiteren Spannungswert U_{B} abgesenkt. Die Summe U_{AB} der beiden Absenkungswerte U_{A} und U_{B} entspricht dabei dem Spannungsabfall des fiktiven Leistungsteils bei der zweiten Stromgrenze S2. Auf diese Weise ist sichergestellt, das bei jeder Stromgrenze S1, S2 die Ausgangsspannung U_{OUT} des entsprechenden Leistungsteils ausreichend abgesenkt wird. Die Ausgangsspannungen der anderen parallel geschalteten Leistungsteile, welche die Stromgrenze S1 bzw. S2 noch nicht erreicht haben, liegen dann jedenfalls über der abgesenkten Ausgangsspannung. Diese Leistungsteile liefern infolgedessen einen gleich hohen Beitrag zum Gesamtstrom.

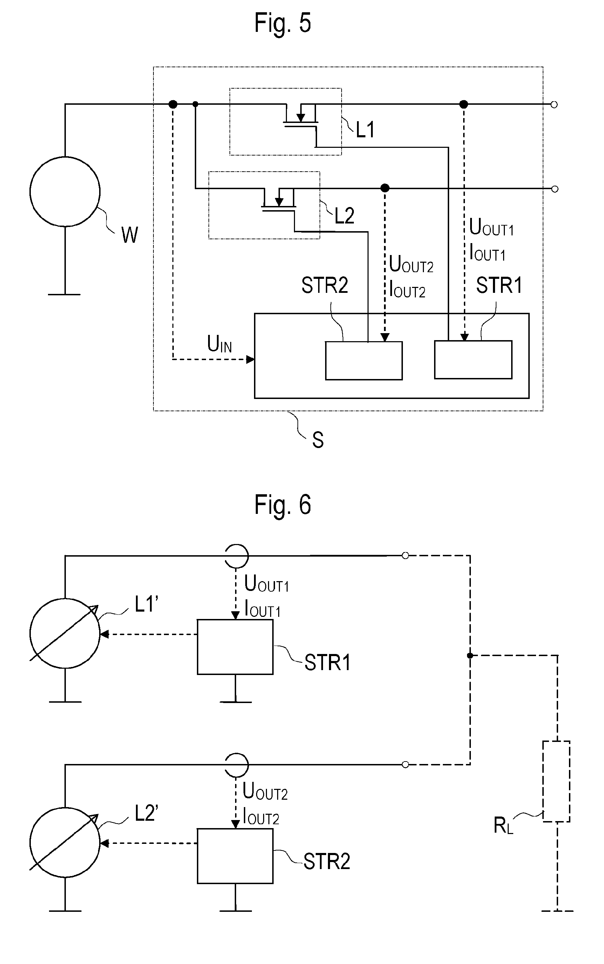

Eine schematische Schaltungsanordnung ist in Fig. 5 dargestellt. Zwei Ausgänge sind über zwei als Längsregler ausgebildete Leistungsteile L1, L2 an einen gemeinsamen Wandler W angeschaltet. Jeder Leistungsteil L1, L2 wird dabei unabhängig voneinander von einer eigenen Steuerung STR1, STR2 angesteuert. Gemeinsam mit den Steuerungen STR1, STR2 bilden die beiden Leistungsteile L1, L2 ein elektronisches Sicherungsmodul S mit zwei Ausgangskanälen. Den Steuerungen STR1, STR2 sind dabei einerseits gemeinsame Größen wie die Eingangsspannung U_{IN} und für jeden Kanal die Ausgangsgrößen U_{OUT1}, I_{OUT1} bzw. U_{OUT2}, I_{OUT2} zugeführt.

In diesem Beispiel übernehmen die parallel geschalteten Leistungsteile L1, L2 mit den Steuerungen STR1, STR2 die Funktion der Stromüberwachung und Strombegrenzung. Sobald ein Strom I_{OUT1} bzw. I_{OUT2} eines Leistungsteils L1 bzw. L2 die erste Stromgrenze S1 überschritten, beginnt ein Timer zu laufen. Der jeweilige Leistungsteil L1 bzw. L2 befindet sich dann im Überlastmodus. In diesem Modus kann für eine vorgegebene Zeitspanne (z.B. 5 Sekunden) mehr Strom (z.B. 130% bis 200% des Nennstromes) geliefert werden. Nach Ablauf der Zeitspanne schaltet der Leistungsteil L1 bzw. L2 ab.

Bei der vorliegenden Erfindung besteht der Vorteil, dass die Aktivierung des Timers nicht schon beim Erreichen der ersten Stromgrenze S1 erfolgt. Erreicht beispielsweise der Strom I_{OUT1} des ersten Leistungsteils L1 infolge eines geringeren Innenwiderstands (höhere Ausgangsspannung U_{OUT1}) zuerst die ersten Stromgrenze S1, wird zunächst nur wie oben beschrieben die Ausgangsspannung U_{OUT1} abgesenkt. Dies geschieht durch Erhöhung der Durchlassspannung. Thermisch ist jeder Leistungsteil dafür ausgelegt, weil im ungünstigsten Fall diese erhöhte Durchlassspannung infolge eines Innenwiderstands an der oberen Toleranzgrenze auftritt. Der Timer läuft zu diesem Zeitpunkt noch nicht, weil noch kein Eintritt in den Überlastmodus geschieht. Stattdessen liefert der zweite Leistungsteil L2 mehr Strom I_{OUT2} an den parallel geschalteten Ausgang, weil dessen Ausgangsspannung U_{OUT2} nun über der abgesenkten Ausgangsspannung U_{OUT1} liegt. Erreicht dabei der Strom I_{OUT2} des zweiten Leistungsteils L2 ebenfalls die erste Stromgrenze S1, wird auch dessen Ausgangsspannung U_{OUT2} abgesenkt. Mit steigender Last wird also ein Punkt erreicht, an dem beide Leistungsteile L1 L2 den gleichen Strom S1 liefern.

Steigt ab diesem Zeitpunkt die von einer Last benötigte Leistung weiter an, geht der erste Leistungsteil L1 in den Überlastmodus und liefert einen höheren Strom I_{OUT1} mit der vorgegeben Zeitbeschränkung. Alternativ zur Zeitbeschränkung ist auch eine thermische Überwachung möglich. Dabei schaltet der betroffene Leistungsteil L1 im Überlastmodus erst ab, wenn die thermische Belastbarkeit eines kritischen Bauteils erreicht wird. Mit weiter steigender Last wird also der bessere erste Leistungsteil L1 mittels Spannungsregler auf der abgesenkten Spannung gehalten, obwohl der Leistungsteil L1 einen geringeren Innenwiderstand hätte. Bei steigendem Strom bleibt die Ausgangsspannung U_{OUT1} des bessern Leistungsteils L1 abgesenkt und der erste Leistungsteil L1 übernimmt den gesamten zusätzlichen Strom. Damit ist er im Überlastmodus. Erst wenn der interne Widerstand des ersten Leistungsteils L1 eine geringfügige Reduktion der Ausgangsspannung U_{OUT1} erzwingt, wird der zweite, schlechtere Leistungsteil L2 über die erste Stromgrenze S1 hinaus belastet und sein Timer startet.

Falls in weiterer Folge der Strom I_{OUT1} des ersten Leistungsteils L1 innerhalb der Zeitbeschränkung im Überlastmodus die zweite Stromgrenze 2 erreicht, erfolgt neuerlich eine Spannungsabsenkung. Die abgesenkte Spannung U_{OUT1} ist dann geringer als die momentane Spannung U_{OUT2} des zweiten Leistungsteils L2. Der Strom I_{OUT2} des zweiten Leistungsteils L2 steigt an, bis auch hier die zweite Stromgrenze S2 erreicht wird.

Wenn alle Leistungsteile L1, L2 die zweite Stromgrenze S2 erreichen, liefert das Stromversorgungssystem die maximal mögliche Leistung mit der Summe der maximal zulässigen Ströme (z.B. zwei mal 130% des jeweiligen Nennstromes).

Mit weiter steigendem Leistungsbedarf überschreitet der Leistungsteil L1 mit dem geringeren Innenwiderstand die zweite Stromgrenze S2 und geht in einen Begrenzungsmodus über. Dieser Begrenzungsmodus ist allerdings nur kurz aufrecht zu erhalten, weil es sonst zu einer Überhitzung des betroffenen Leistungsteils L1 kommt. Deshalb schaltet der Leistungsteil L1 nach einer kurzen Zeitspanne (z.B. 100ms) im Begrenzungsmodus ab. Geht jedoch vor Ablauf dieser kurzen Zeitspanne der Strom I_{OUT1} unter die zweite Stromgrenze S2 zurück, dann erfolgt erst eine Abschaltung, wenn die vorgegebene Zeitbeschränkung im Überlastmodus abgelaufen ist. Auch hier kommt es zu keiner Abschaltung, wenn zuvor der Strom I_{OUT1} unter die erste Stromgrenze S1 absinkt. Insbesondere beim Einschalten einer Last kommt es zu kurzen Stromspitzen, wenn Kapazitäten aufgeladen werden müssen. Mit der vorliegenden Erfindung steht ein Stromversorgungssystem zur Verfügung, das für diesen Fall sehr hohe Ladeströme liefert, ohne dass es zu einer Abschaltung eines Leistungsteils L1 bzw. L2 kommt. Es werden immer alle parallel geschalteten Leistungsteile L1, L2 bis zur jeweiligen Stromgrenze S1, S2 genutzt.

Eine alternative Anordnung mit zwei als Wandler ausgebildete Leistungsteile L1', L2' ist in Fig. 6 dargestellt. Jeder Leistungsteil L1', L2' ist mit einer eigenen Steuerung STR1, STR2 angesteuert. Die Toleranzen bei der Ansteuerung bewirken dabei abweichende U/I-Kennlinien, sodass immer ein Leistungsteil L1' bzw. L2' mehr Strom I_{OUT1} bzw. I_{OUT2} an eine angeschlossene Last R_{L} liefert. Auch hier sind zwei Stromgrenzen S1, S2 vorgegeben. Bei Überschreitung der ersten Stromgrenze S1 beginnt ein Überlastmodus, in dem der betreffende Leistungsteil L1' bzw. L2' einen höheren Strom (z.B. 150% des Nennstromes) an den jeweiligen Ausgang liefert. Nach Erreichen einer vorgegeben Zeitspanne im Überlastbetrieb oder bei Überschreitung der zweiten Stromgrenze S2 schaltet der Leistungsteil L1' bzw. L2' ab.

Bei Erreichung einer Stromgrenze S1, S2 geschieht zunächst die oben beschriebene Spannungsabsenkung, um alle parallel geschalteten Leistungsteile L1', L2' an die jeweilige Stromgrenze S1, S2 heranzuführen. Auf diese Weise wird immer die volle Leistungsfähigkeit aller parallel geschalteter Leistungsteile L1', L2' zur Versorgung einer angeschlossenen Last R_{L} genutzt.

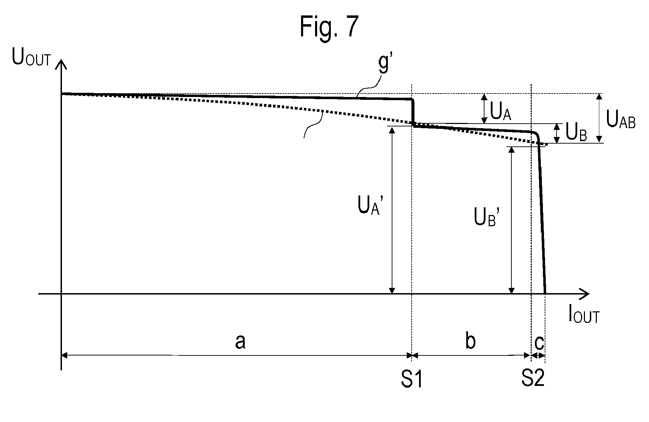

Fig. 7 zeigt wie Fig. 4 eine U/I-Kennlinie mit einer Spannungsabsenkung bei der ersten und zweiten Stromgrenze S1, S2. Dabei ist jeder Steuerung STR1, STR2 ein Absenkungswert U_{A}' U_{B}' vorgegeben, der einer absoluten Ausgangsspannung U_{OUT} entspricht. Diese Absenkungswerte U_{A}' U_{B}' sind so gewählt, dass sie jedenfalls unterhalb einer Ausgangsspannung U_{OUT} eines fiktiven Leistungsteils mit der schlechtest möglichen U/I-Kennlinie f liegen. Die Werte sind somit auf die Spannungsabfälle U_{A}, U_{B} bzw. U_{AB} eines solchen fiktiven Leistungsteils abgestimmt.

Eine derartige Vorgabe von Absenkungswerten U_{A}' U_{B}' ist für die Parallelschaltung von als Wandler ausgebildete Leistungsteilen L1', L2' vorgesehen. Aber auch für als Leistungsschutzschalter ausgebildete Leistungsteile L1, L2 ist eine solche Art der Spannungsabsenkung geeignet.

Eine Vorgabe des jeweiligen Absenkungswertes U_{A}' U_{B}' als absolute Ausgangsspannung U_{OUT} ist jedenfalls sinnvoll, wenn der jeweilige Leistungsteil L1', L2' im Normalmodus auf eine konstante Ausgangsspannung U_{OUT} regelt. Dabei ist aufgrund einer ausreichend hohen Eingangsspannung jeder Spannungsregler imstande, den Innenwiderstand des zugehörigen Leistungsteils L1', L2' zu kompensieren. Das trifft auf lineare Spannungsregler ebenso zu wie auf getakteten Leistungsteilen.

Beispielsweise fällt an einem Leistungsteil L1', L2' mit Längsregler ein höher Widerstand als der Innenwiderstand des Leistungsteils L1', L2' ab. Der jeweilige Absenkungswert U_{A}' U_{B}' orientiert sich dann nicht am internen Leistungsteilwiderstand, sondern an den Toleranzen der Spannungseinstellung und den eventuell unterschiedlichen Kabellängen und Querschnitten jener Verbindungselemente, mit denen die beiden Leistungsteile L1', L2' an die gemeinsame Ausgangsspannung angeschlossen sind. Dabei ist der größte Anteil der Toleranz auf die Spannungseinstellung und die thermische und alterungsbedingte Drift der Spannungsregelung zurückzuführen.

## Patentansprüche

1. Steuerungsverfahren eines Stromversorgungssystem mit wenigstens zwei Leistungsteilen (L1, L2, L1', L2'), deren Leistungsausgänge parallel geschaltet sind, wobei jeder Leistungsteil (L1, L2, L1', L2') eine Ausgangsspannung (U_{OUT}, U_{OUT1}, U_{OUT2}) aufweist und mittels einer eigenen Steuerung (STR1, STR2) angesteuert wird und wobei jeder Steuerung (STR1, STR2) zumindest eine erste Stromgrenze (S1) vorgegeben ist, bis zu der die Steuerung (STR1, STR2) den zugeordneten Leistungsteil (L1, L2, L1', L2') in einem Normalmodus ansteuert, **dadurch gekennzeichnet, dass** jeder Steuerung (STR1, STR2) ein erster Absenkungswert (U_{A}, U_{A}') der Ausgangsspannung (U_{OUT}, U_{OUT1}, U_{OUT2}) bei Erreichung der ersten Stromgrenze (S1) vorgegeben ist und dass die jeweilige Steuerung (STR1, STR2) bei Erreichung der ersten Stromgrenze (S1) die Ausgangsspannung (U_{OUT}, U_{OUT1}, U_{OUT2}) des zugehörigen Leistungsteils (L1, L2, L1', L2') auf den ersten Absenkungswert (U_{A}, U_{A}') regelt.

2. Steuerungsverfahren nach Anspruch 1, **dadurch gekennzeichnet, dass** der erste Absenkungswert (U_{A}, U_{A}') abgestimmt ist auf einen Toleranzbereich der Ausgangsspannungen (U_{OUT}, U_{OUT1}, U_{OUT2}), welche die einzelnen Leistungsteile (L1, L2, L1', L2') entsprechend einer U/I-Kennlinie (f, g) bei Erreichung der ersten Stromgrenze (S1) liefern.

3. Steuerungsverfahren nach Anspruch 1 oder 2, **dadurch gekennzeichnet, dass** jeder Steuerung (STR1, STR2) eine zweite Stromgrenze (S2) vorgegeben ist, die höher als die erste Stromgrenze (S1) ist und dass der jeweiligen Steuerung (STR1, STR2) ein zweiter Absenkungswert (U_{B}, U_{AB}, U_{B}') für die Ausgangsspannung (U_{OUT}, U_{OUT1}, U_{OUT2}) bei Erreichung der zweiten Stromgrenze (S2) vorgegeben ist und dass die jeweilige Steuerung (STR1, STR2) bei Erreichung der zweiten Stromgrenze (S2) die Ausgangsspannung (U_{OUT}, U_{OUT1}, U_{OUT2}) des zugehörigen Leistungsteils (L1, L2, L1', L2') auf den zweiten Absenkungswert (U_{B}, U_{AB}, U_{B}') regelt.

4. Steuerungsverfahren nach einem der Ansprüche 1 bis 3, **dadurch gekennzeichnet, dass** zumindest ein Leistungsteil (L1, L2, L1', L2') in einem Überlastmodus betrieben wird, wenn jeder andere Leistungsteil (L1, L2, L1', L2') auf den ersten Absenkungswert (U_{A}, U_{A}') regelt wird.

5. Steuerungsverfahren nach Anspruch 3 oder 4, **dadurch gekennzeichnet, dass** der zweite Absenkungswert (U_{B}, U_{AB}, U_{B}') abgestimmt ist auf einen Toleranzbereich der Ausgangsspannungen (U_{OUT}, U_{OUT1}, U_{OUT2}), welche die einzelnen Leistungsteile (L1, L2, L1', L2') entsprechend einer U/I-Kennlinie (f, g) bei Erreichung der zweiten Stromgrenze (S2) liefern.

6. Steuerungsverfahren nach einem der Ansprüche 3 bis 5, **dadurch gekennzeichnet, dass** zumindest ein Leistungsteil (L1, L2, L1', L2') in einem Begrenzungsmodus betrieben wird, wenn jeder andere Leistungsteil (L1, L2, L1', L2') auf den zweiten Absenkungswert (U_{B}, U_{AB}, U_{B}') regelt wird.

7. Steuerungsverfahren nach einem der Ansprüche 1 bis 6, **dadurch gekennzeichnet, dass** als jeweiliger Absenkungswert (U_{A}, U_{B}, U_{AB}) eine Spannungsdifferenz vorgegeben ist.

8. Steuerungsverfahren nach einem der Ansprüche 1 bis 6, **dadurch gekennzeichnet, dass** als jeweiliger Absenkungswert (U_{A}', U_{B}') ein Ausgangsspannungswert vorgegeben ist.

9. Steuerungsverfahren nach einem der Ansprüche 1 bis 8, **dadurch gekennzeichnet, dass** jeder Leistungsteil (L1, L2, L1', L2') jeweils eine mit steigendem Ausgangsstrom (I_{OUT}, I_{OUT1}, I_{OUT2}) abfallende Ausgangsspannung (U_{OUT}, U_{OUT1}, U_{OUT2}) liefert.

10. Steuerungsverfahren nach einem der Ansprüche 1 bis 8, **dadurch gekennzeichnet, dass** jeder Leistungsteil eine konstant geregelte Ausgangsspannung (U_{OUT}, U_{OUT1}, U_{OUT2}) liefert.

11. Stromversorgungssystem mit wenigstens zwei Leistungsteilen (L1, L2, L1', L2'), deren Leistungsausgänge parallel geschaltet sind, wobei jeder Leistungsteil (L1, L2, L1', L2') mittels einer eigenen Steuerung (STR1, STR2) angesteuert ist, **dadurch gekennzeichnet, dass** jede Steuerung (STR1, STR2) zur Durchführung eines Verfahrens nach Anspruch 1 bis 10 eingerichtet ist.

12. Stromversorgungssystem nach Anspruch 11, **dadurch gekennzeichnet, dass** das Stromversorgungssystem ein Stromversorgungsgerät mit mehreren Ausgängen umfasst, welche mittels einer Verbindung parallel geschaltet sind.

13. Stromversorgungssystem nach Anspruch 11, **dadurch gekennzeichnet, dass** das Stromversorgungssystem mehrere Stromversorgungsgeräte umfasst, deren Ausgänge mittels einer Verbindung parallel geschaltet sind.

14. Stromversorgungssystem nach Anspruch 13, **dadurch gekennzeichnet, dass** jedes Stromversorgungsgerät einen Spannungsregler umfasst, um die jeweilige Ausgangsspannung (U_{OUT}, U_{OUT1}, U_{OUT2}) auf einen konstanten Wert zu regeln.
